# EUROPÄISCHE PATENTSCHRIFT

(11) **EP 2 051 560 B1**
(45) Veröffentlichungstag und Bekanntmachung des Hinweises auf die Patenterteilung: **30.05.2012**
(21) Anmeldenummer: 08015222.6
(22) Anmeldetag: 28.08.2008
(51) Int. Cl.: H04W 80/06, H04L 12/56, H04L 29/06

(54) **Verfahren zum Übertragen von Signalisierungsnachrichten in einem paketvermittelten Netzwerk und paketvermitteltes Netzwerk**
Method for transferring signalisation messages in a packet network and packet network
Procédé de transmission d'informations de signalisation dans un réseau transmis par paquet et réseau transmis par paquet

(30) Priorität: 26.09.2007 EP 07018979
(43) Veröffentlichungstag der Anmeldung: 22.04.2009
(73) Patentinhaber: Siemens Aktiengesellschaft, 80333 München (DE)
(72) Erfinder: Khan, Muddassir Gohar, 90411 Nürnberg (DE); Schwingenschlögl, Christian, Dr., 85640 Putzbrunn (DE); Ziller, Andreas, 81827 München (DE)

(56) Entgegenhaltungen:
- US-A1- 2007 184 826
- US-B1- 6 757 738
- KATTI S ET AL: "XORs in The Air: Practical Wireless Network Coding" PROCEEDINGS OF ACM SIGCOMM, XX, XX, [Online] 11. September 2006 (2006-09-11), Seiten 1-12, XP002493001 Gefunden im Internet: URL:http://piper.csail.mit.edu/papers/cope sc.pdf>

## Beschreibung

Die Erfindung betrifft ein Verfahren zum Übertragen von Signalisierungsnachrichten in einem paketvermittelten Netzwerk und ein solches paketvermitteltes Netzwerk.

Das technische Gebiet der Erfindung betrifft paketvermittelte Netzwerke, wie WLAN-Netze, die Network-Coding unterstützen.

Network-Coding ist beispielsweise aus der Veröffentlichung "Network Information Flow", Rudolf Ahlswede et al., IE-EE Transactions on Information Theory, Vol 46, No. 4, July 2000, bekannt. Durch den Einsatz von Network-Coding wird die Anzahl notwendiger Übertragungen in dem jeweiligen Netzwerk reduziert.

Weiter ist die Möglichkeit des Einsatzes von Network-Coding in einem WLAN-Netz aus der Veröffentlichung "XORs in the Air, Practical Wireless Network Coding", Sachin Katti et al., SIG-COMM 2006, September 11 - 15, 2006, Pisa, Italy, bekannt. Durch diese Lösung, im Weiteren mit COPE bezeichnet, ist es möglich, Network-Coding direkt in einem WLAN-Netz anzuwenden. Dabei werden herkömmlicherweise Bestätigungen in verschiedenen Schichten oder Layern verwendet. Beispielsweise werden zusätzlich zu den MAC-Schicht-Bestätigungen, die beispielsweise im Standard 802.11 verwendet werden, Bestätigungen der Network-Coding-Schicht selbst genutzt.

Des Weiteren werden auch von der darüberliegenden TCP-Schicht TCP-Bestätigungen verwendet, um zu bestätigen, dass das jeweilige Datenpaket bei dem Zielknoten angekommen ist. Wie zum Beispiel in US 6757738 offenbart wird. Dabei stellen TCP-Bestätigungen eine Möglichkeit dar, die Systemleistungsfähigkeit zu optimieren. Herkömmlicherweise sendet der Zielknoten oder Empfangsknoten eine TCP-Bestätigung oder ein TCP-Bestätigungspaket zu dem Quellknoten, um die erfolgreiche Übertragung zu bestätigen. Falls vom Quellknoten oder Sendeknoten innerhalb einer vorbestimmten Zeitdauer keine solche TCP-Bestätigung empfangen wird, muss das entsprechende Paket nachteiligerweise erneut an den Zielknoten übertragen werden. Weiterhin kann das TCP-Protokoll bei einem Paketverlust mit einem Absenken der Datenübertragungsrate reagieren.

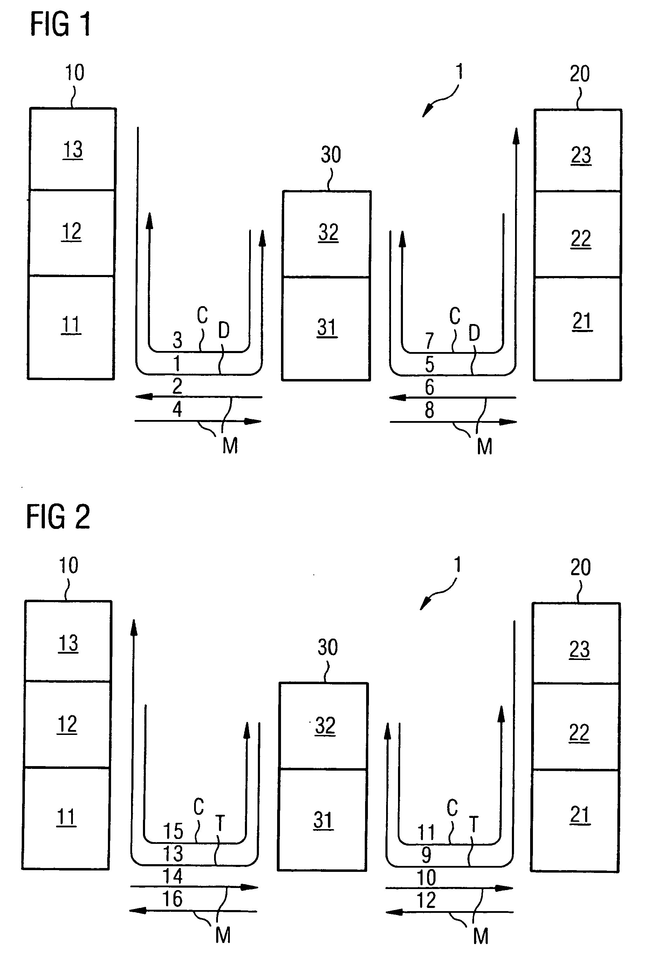

Zur Illustrierung der Verwendung verschiedener Bestätigungen verschiedener Schichten bei der Übertragung eines TCP-Datensegmentes D zeigen die Fig. 1 und 2 ein schematisches Blockschaltbild eines Netzwerkes 1 mit zwei Sende-/Empfangsknoten 1 und 2 und einen die beiden Sende-/Empfangsknoten 1 und 2 koppelnden Weiterleitungsknoten 3.

Der Weiterleitungsknoten 3 hat zumindest eine zuverlässige Sicherungsschicht 31 und eine Network-Coding-Schicht 32.

Demgegenüber haben der erste Empfangsknoten 10 und der zweiten Empfangsknoten 20 jeweils zumindest eine zuverlässige Sicherungsschicht 11, 21, eine Network-Coding-Schicht 12, 22 und zusätzlich eine zuverlässige Transportschicht 13, 23.

Insbesondere zeigen die Fig. 1 und 2 die notwendigen Übertragungen inklusive der notwendigen Bestätigungen für das Senden eines TCP-Datensegmentes D von dem ersten Sende-/Empfangsknoten 10 über den Weiterleitungsknoten 30 an den zweiten Sende-/Empfangsknoten 20.

Die zwischen den Knoten 10, 20 und 30 übertragenen Pakete sind mit jeweils einem Buchstaben und einer Zahl bezeichnet. Die Zahlen der Pakete indizieren ihre chronologische Abfolge.

Hinsichtlich der Buchstaben bezeichnet "D" ein TCP-Datensegment, "M" eine MAC-Bestätigung, "C" eine COPE-Bestätigung und "T" eine TCP-Bestätigung.
Beispielsweise stellt der Pfeil bezeichnet mit "2" und "M" das in der Abfolge gemäß den Fig. 1 und 2 als zweites übertragene Datenpaket dar. Dieses zweite übertragene Datenpaket M ist eine MAC-Bestätigung M, die von dem Weiterleitungsknoten 30 als Bestätigung für das empfangene Transportschicht-Datensegment D von der MAC-Schicht 31 des Weiterleitungsknotens 30 an die MAC-Schicht 11 des ersten Sende-/Empfangsknotens 10 übertragen wird.

Insgesamt sind gemäß der Fig. 1 und 2 für die Übertragung des TCP-Datensegmentes D, bezeichnet mit "D" und "1" zwischen dem ersten Sendeknoten 10 und dem Weiterleitungsknoten 30 und mit "D" und "5" zwischen dem Weiterleitungsknoten 30 und dem zweiten Sende-/Empfangsknoten 20, sechzehn Übertragungen notwendig, bis der erfolgreiche Empfang des TCP-Datensegmentes D dem ursprünglichen Sender des TCP-Datensegmentes D, dem ersten Sende-/Empfangsknoten 10, bestätigt ist.

Insgesamt beinhalten die sechzehn übertragenen Pakete nach den Fig. 1 und 2 nur zwei Datenpakete, nämlich das TCP-Datensegment bezeichnet mit "D" und "1" und das TCP-Datensegment bezeichnet mit "D" und "5". Die übrigen vierzehn Pakete beinhalten Signalisierungsnachrichten, insbesondere Bestätigungen.

Demnach ist es eine Aufgabe der vorliegenden Erfindung, die Anzahl notwendiger Signalisierungsnachrichten in einem paketvermittelten Netzwerk zu reduzieren bzw. zu minimieren.

Erfindungsgemäß wird diese gestellte Aufgabe durch ein Verfahren mit den Merkmalen des Patentanspruchs 1 zum Übertragen von Signalisierungsnachrichten in einem paketvermittelten Netzwerk und/oder durch ein paketvermitteltes Netzwerk mit den Merkmalen des Patentanspruchs 21 gelöst.

Demgemäß wird ein Verfahren zum Übertragen von Signalisierungsnachrichten in einem paketvermittelten Netzwerk 1 vorgeschlagen, welches folgende Schritte hat:
a) Bereitstellen eines paketvermittelten Netzwerks mit zumindest drei Knoten, wobei ein jeweiliger Weiterleitungs-Knoten zumindest eine zuverlässige Sicherungsschicht und eine Network-Coding-Schicht und ein jeweiliger Sende-/Empfangs-Knoten zusätzlich eine zuverlässige Transportschicht hat;
b) Verpacken zumindest einer Signalisierungsnachricht in ein jeweiliges uncodiertes Transportschicht-Paket ohne Transportschicht-Nutzdaten in einem Sende-/Empfangs-Knoten;
c) Priorisiertes Senden des jeweiligen uncodierten Transportschicht-Paketes an einen vorbestimmten Weiterleitungs-Knoten durch den Sende-/Empfangs-Knoten; und
d) Priorisiertes Weiterleiten des jeweiligen uncodierten Transportschicht-Paketes durch den Weiterleitungs-Knoten.

Weiter wird ein paketvermitteltes Netzwerk zum Übertragen von Signalisierungsnachrichten vorgeschlagen, welches zumindest drei Knoten aufweist, wobei ein jeweiliger Weiterleitungs-Knoten zumindest eine zuverlässige Sicherungsschicht und eine Network-Coding-Schicht und ein jeweiliger Sende-/Empfangs-Knoten zusätzlich eine zuverlässige Transportschicht hat, wobei der jeweilige Sende-/Empfangs-Knoten dazu eingerichtet ist, zumindest eine Signalisierungsnachricht in ein jeweiliges uncodiertes Transportschicht-Paket ohne Transportschicht-Nutzdaten zu verpacken und das jeweilige uncodierte Transportschicht-Paket an einen vorbestimmten Weiterleitungs-Knoten priorisiert zu senden, wobei der vorbestimmte Weiterleitungs-Knoten das uncodierte Transportschicht-Paket priorisiert weiterleitet.

Ein Vorteil der vorliegenden Erfindung liegt darin, dass durch den Einsatz des erfindungsgemäßen uncodierten Transportschicht-Paketes ohne Transportschicht-Nutzdaten, im Weiteren GOHAR-Paket, die Anzahl notwendiger Bestätigungen bei der Übertragung von Transportschicht-Paketen reduziert wird.

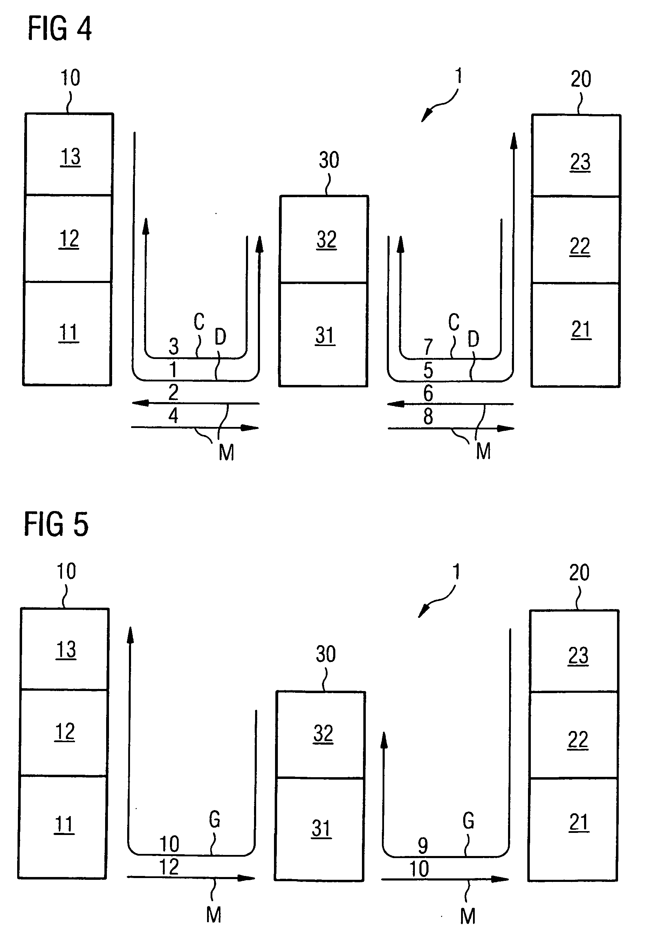

Insbesondere können durch das priorisierte Senden und durch das priorisierte Weiterleiten des GOHAR-Paketes verschiedene Bestätigungen, insbesondere Sicherheitsschicht-Bestätigungen und Network-Coding-Bestätigungen, entfallen. Dies wird beispielsweise deutlich beim Vergleich der Fig. 2 mit der Fig. 5, auf welcher im Folgenden noch detailliert eingegangen wird.

Weiter weist das erfindungsgemäße GOHAR-Paket infolge des Fehlens von Transportschicht-Nutzdaten nur eine geringe Datenmenge auf. Dadurch wird die notwendige Belastung des Netzwerkes für die Übertragung der GOHAR-Pakete minimiert.

Ferner werden die erfindungsgemäßen GOHAR-Pakete im Gegensatz zur herkömmlichen Multicast- oder Pseudo-Broadcast-Übertragung der Transportschicht-Bestätigungen jeweils an einen vorbestimmten Knoten gesendet bzw. weitergeleitet (Unicast-Übertragung). Durch die erfindungsgemäße Unicast-Übertragung der GOHAR-Pakete werden die Wahrscheinlichkeiten für Timeouts und für Paketverluste verringert.

Weiterhin wird dadurch auch die Wahrscheinlichkeit für notwendige Wiederübertragungen von Transportschicht-Bestätigungen verringert.

Insgesamt wird durch Anwendung der vorliegenden Erfindung die Datenübertragungsrate in dem paketvermittelten Netzwerk vergrößert. Der Anmelder hat dazu eine Implementierung einer TCP-Verbindung über zwei Weiterleitungsknoten ohne Verwendung der erfindungsgemäßen GOHAR-Pakete und unter Verwendung der erfindungsgemäßen GOHAR-Pakete durchgeführt. Ohne den Einsatz der erfindungsgemäßen GOHAR-Pakete ergab sich eine Datenübertragungsrate von 88 kBit/s in einer Richtung und 105 kBit/s in der anderen Richtung. Im Gegensatz dazu ergab sich bei derselben TCP-Verbindung unter Verwendung des erfindungsgemäßen GOHAR-Paketes eine Datenübertragungsrate von 143 kBit/s in einer Richtung und 134 kBit/s in der anderen Richtung.

Im Sinne der vorliegenden Anmeldung meint eine zuverlässige Schicht, wie eine zuverlässige Sicherungsschicht oder zuverlässige Transportschicht, dass diese den Empfang einer Nachricht der jeweiligen Schicht dem Sender dieser Nachricht mit einer Bestätigung quittiert, insbesondere ein BestätigungsPaket an den Sender der Nachricht überträgt.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Weiterbildung wird die jeweilige zuverlässige Sicherungsschicht der Knoten dazu eingerichtet, eine Sicherungsschicht-Bestätigung zur Bestätigung eines empfangenen Sicherungsschicht-Pakets an den das Sicherungsschicht-Paket sendenden Knoten zu übertragen.

Gemäß einer weiteren bevorzugten Weiterbildung wird die jeweilige zuverlässige Transportschicht der Knoten dazu eingerichtet, eine Transportschicht-Bestätigung zur Bestätigung eines empfangenen, mittels Network-Coding codierten Transportschicht-Pakets an den das codierte Transportschicht-Paket sendenden Knoten zu übertragen.

Gemäß einer weiteren bevorzugten Weiterbildung wird das jeweilige uncodierte Transportschicht-Paket priorisiert gegenüber mittels Network-Coding codierten Transportschicht-Paketen gesendet.

Ein Vorteil des priorisierten Weiterleitens des uncodierten Transportschicht-Paketes gegenüber den codierten Transportschicht-Paketen liegt darin, dass bestimmte unterschiedliche Bestätigungen, insbesondere Sicherheitsschicht-Bestätigungen und Netzwork-Coding-Bestätigungen, entfallen können.

Gemäß einer weiteren bevorzugten Weiterbildung wird die jeweilige zuverlässige Sicherungsschicht der Knoten dazu eingerichtet, das uncodierte Transportschicht-Paket zu detektieren und abhängig davon das detektierte, uncodierte Transportschicht-Paket priorisiert weiterzuleiten.

Ein Vorteil des Detektierens des uncodierten Transportschichtpaketes durch die jeweilige zuverlässige Sicherungsschicht liegt darin, dass infolge der Detektion das jeweilige uncodierte Transportschichtpaket sofort und ohne weitere Latenzzeit weitergeleitet werden kann, insbesondere priorisiert weitergeleitet werden kann.

Gemäß einer weiteren bevorzugten Weiterbildung werden bei der Detektion auf uncodierte Transportschicht-Pakete die von der jeweiligen zuverlässigen Sicherungsschicht empfangenen Transportschicht-Pakete auf ein Fehlen von Transportschicht-Nutzdaten untersucht.

Die Detektion auf das Fehlen von Transportschicht-Nutzdaten ist vorteilhafterweise einfach konfigurierbar und damit kostengünstig darstellbar.

Gemäß einer weiteren bevorzugten Weiterbildung wird das jeweilige von der zuverlässigen Sicherungsschicht empfangene Transportschicht-Paket bei Fehlen der Transportschicht-Nutzdaten von der zuverlässigen Sicherungsschicht priorisiert weitergeleitet.

Ergibt die Detektion, dass das Transportschicht-Paket keine Transportschicht-Nutzdaten aufweist, kann dieses vorteilhafterweise sofort an den nächsten Knoten oder die nächsten Knoten weitergeleitet werden.

Gemäß einer weiteren bevorzugten Weiterbildung wird ein vorbestimmtes Feld (Type, Sub type) des Headers des uncodierten Transportschicht-Pakets mit einer Anzeigeinformation ausgestattet, welche dazu eingerichtet wird, der jeweiligen zuverlässigen Sicherungsschicht eines das uncodierte Transportschicht-Paket empfangenden Knotens anzuzeigen, dass das empfangene Transportschicht-Paket ein uncodiertes Transportschicht-Paket ohne Transportschicht-Nutzdaten ist.

Vorteilhafterweise wird durch die Anzeigeinformation eine einfache Möglichkeit für die Detektion eines uncodierten Transportschicht-Paketes bereitgestellt.

Gemäß einer weiteren bevorzugten Weiterbildung wird die jeweilige zuverlässige Sicherungsschicht der Knoten dazu eingerichtet, das vorbestimmte Feld (Type, Sub type) des Headers des uncodierten Transportschicht-Pakets zu interpretieren.

Durch die Interpretationsmöglichkeit des vorbestimmten Feldes des Headers des uncodierten Transportschicht-Paketes kann die jeweilige zuverlässige Sicherheitsschicht auf einfache Weise uncodierte Transportschicht Pakete bzw. GOHAR-Pakete detektieren.

Gemäß einer weiteren bevorzugten Weiterbildung wird die jeweilige Network-Coding-Schicht der Knoten des Netzwerkes dazu eingerichtet, bei Empfangen eines codierten Transportschicht-Pakets eine Network-Coding-Bestätigung an den sendenden Knoten des codierten Transportschicht-Pakets zu übertragen und bei Empfangen eines uncodierten Transportschicht-Pakets das empfangene uncodierte Transportschicht-Paket ohne Übertragung einer Network-Coding-Bestätigung weiterzuleiten.

Ein Vorteil der obigen Weiterbildung liegt in der Differenzierung der Notwendigkeit von Network-Coding-Bestätigungen. Durch die erfindungsgemäß wegzulassenden Network-Coding-Bestätigungen wird die Gesamtbelastung des Netzwerkes vorteilhafterweise reduziert.

Gemäß einer weiteren bevorzugten Weiterbildung wird jede Signalisierungsnachricht in ein jeweiliges uncodiertes Transportschicht-Paket ohne Transportschicht-Nutzdaten verpackt wird.

Gemäß einer weiteren bevorzugten Weiterbildung weist die zuverlässige Sicherungsschicht eine MAC-Schicht und eine LLC-Schicht auf und/oder die zuverlässige Transportschicht als eine TCP-Schicht ausgebildet wird.

Gemäß einer weiteren bevorzugten Weiterbildung werden ein TCP-ACK, ein TCP-SYN und ein TCP-FIN in ein jeweiliges uncodiertes Transportschicht-Paket ohne Transportschicht-Nutzdaten verpackt.

Gemäß einer weiteren bevorzugten Weiterbildung wird das vorbestimmte Feld des Headers des uncodierten Transportschicht-Pakets als Ethertype-Feld der LLC-Schicht ausgebildet.

Gemäß einer weiteren bevorzugten Weiterbildung wird das vorbestimmte Feld (Type, Sub type) des Headers des uncodierten Transportschicht-Pakets als Type-Feld (Type) oder als Sub-type-Feld (Sub type) der MAC-Schicht ausgebildet.

Obige beiden Weiterbildungen haben den gemeinsamen Vorteil, dass die Erfindung ohne eine Erweiterung oder Abänderung bestehender Standards angewendet werden kann.

Gemäß einer weiteren bevorzugten Weiterbildung wird eine Sicherungsschicht-Bestätigung von der zuverlässigen Sicherungsschicht dann als Antwort auf ein empfangenes Transportschicht-Paket erzeugt und an den sendenden Knoten des Transportschicht-Pakets übertragen, wenn das vorbestimmte Feld (Type, Sub type) die Anzeigeinformation zur Anzeige eines uncodierten Transportschicht-Pakets nicht aufweist.

Gemäß einer weiteren bevorzugten Weiterbildung wird keine Sicherungsschicht-Bestätigung als Antwort auf ein empfangenes Transportschicht-Paket erzeugt und an den sendenden Knoten des Transportschicht-Pakets übertragen, wenn das vorbestimmte Feld (Type, Sub type) ein Network-Coding-Paket in den Nutzdaten des Transportschicht-Pakets indiziert.

Mit Bezug auf Fig. 1 oder Fig. 4 ist ersichtlich, dass für die Übertragung eines Transportschicht-Datensegmentes, beispielsweise eines TCP-Datensegmentes, in einem paketvermittelten Netzwerk mit Network-Coding von einem Knoten zum nächsten Knoten vier Übertragungen notwendig sind. Bei der ersten Übertragung wird das Transportschicht-Datensegment D von dem ersten Sende-/Empfangsknoten 10 zum Weiterleitungs-knoten 30 übertragen (siehe 1). Dieses wird beispielsweise in einem MAC-Rahmen an den Weiterleitungsknoten 30 übertragen. Die zweite Übertragung zeigt die darauf folgende MAC-Bestätigung M, die gemäß dem 802.11-Protokoll als Bestätigung für den zuvor empfangenen MAC-Rahmen mit dem codierten Transportschicht-Datensegment D zurückgesendet wird (siehe 2). Die Network-Coding-Schicht, welche beispielsweise als COPE-Schicht ausgebildet ist, unterstützt das COPE-Protokoll, welches vorsieht, dass eine erfolgreiche Decodierung eines codierten Transportschicht-Paketes oder -Datensegmentes D durch eine COPE-Bestätigung C (siehe 3) an den Sende-/Empfangsknoten 10 bestätigt wird. Diese COPE-Bestätigung C wird ebenfalls als ein MAC-Rahmen übertragen und erfordert somit ebenfalls eine MAC-Bestätigung M (siehe 4).

Herkömmlicherweise wird das Transportschicht-Datensegment D1 als Multicast oder Pseudo-Broadcast an mehrere Knoten übertragen. Allerdings kann jeweils nur einer der Empfänger des Transportschicht-Datensegmentes D adressiert werden. Dennoch nehmen alle Empfänger dieses Transportschicht-Datensegment D im so genannten Promiscuous-Mode entgegen und entnehmen dem COPE-Header in den Nutzdaten des MAC-Rahmens, ob sie die jeweiligen adressierten Empfänger sind und somit das empfangene Paket des Transportschicht-Datensegmentes D weiterzuverarbeiten haben. Eine MAC-Bestätigung wird in diesem Fall nur von einem einzigen Empfänger des Transportschicht-Datensegmentes D versendet. Aber die Sicherungsschicht-Bestätigung oder MAC-Schicht-Bestätigung M (siehe 2) hat einen geringen Nutzen, da sie nur mitteilt, ob ein einziger von mehreren Empfangsknoten den zugehörigen MAC-Rahmen korrekt empfangen hat. Weiter ist der Informationsgehalt durch die Übertragung der COPE-Bestätigung C (siehe 3) redundant.

Folglich wird die Sicherungsschicht-Bestätigung nur dann erzeugt, wenn das vorbestimmte Feld kein Network-Coding-Paket in den Nutzdaten des Sicherungsschicht-Paketes indiziert. Demgegenüber wird die Sicherungsschicht-Bestätigung dann erzeugt, wenn das vorbestimmte Feld des empfangenen MAC-Rahmens kein COPE-Protokoll in den Nutzdaten dieses MAC-Rahmens indiziert oder ankündigt. Diese COPE-Bestätigung wird von der Sicherungsschicht, dabei insbesondere von der MAC-Schicht, des empfangenen Knotens genauso wie eine protokollkonforme MAC-Bestätigung als Bestätigung eines zuvor für Pseudo-Broadcast versendeten MAC-Rahmens interpretiert. Ist die Decodierung allerdings nicht möglich, wird vorzugsweise eine negative Bestätigung an den sendenden Knoten geschickt. Diese negative Bestätigung kann die zusätzliche Information enthalten, wie im Falle einer positiven COPE-Bestätigung, dass der zuvor empfangene MAC-Rahmen korrekt empfangen wurde.

Gemäß einer weiteren bevorzugten Weiterbildung wird nur eine Network-Coding-Bestätigung von der Network-Coding-Schicht als Antwort auf ein empfangenes Transportschicht-Paket erzeugt und an den sendenden Knoten des Transportschicht-Pakets übertragen, wenn das vorbestimmte Feld (Type, Sub type) ein Network-Coding-Paket in den Nutzdaten des Transportschicht-Pakets indiziert und wenn das Network-Coding-Paket von der jeweiligen Network-Coding-Schicht decodierbar ist.

Gemäß einer weiteren bevorzugten Weiterbildung wird Schritt d) ausgebildet durch:
- Priorisiertes Weiterleiten des jeweiligen uncodierten Transportschicht-Pakets durch den Weiterleitungs-Knoten an einen weiteren vorbestimmten Weiterleitungs-Knoten oder an einen weiteren Sende-/Empfangs-Knoten.

Weiter wird ein Computerprogramm-Produkt vorgeschlagen, welches auf einer programmgesteuerten Einrichtung die Durchführung eines wie oben beschriebenen Verfahrens gemäß der Erfindung veranlasst.

Ein Computerprogramm-Produkt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Gemäß einer bevorzugten Ausgestaltung weist der jeweilige Weiterleitungs-Knoten eine Bitübertragungsschicht, die zuverlässige Sicherungsschicht, die Network-Coding-Schicht und eine IP-Schicht auf.

Gemäß einer weiteren bevorzugten Ausgestaltung weist der jeweilige Sende-/Empfangs-Knoten eine Bitübertragungsschicht, die zuverlässige Sicherungsschicht, die Network-Coding-Schicht, eine IP-Schicht, die zuverlässige Transportschicht und eine Anwendungsschicht auf.

Die Erfindung wird nachfolgend anhand der in den schematischen Figuren angegebenen Ausführungsbeispiele näher erläutert. Es zeigen:
- Fig. 1 und 2: schematische Blockschaltbilder eines paketvermittelten Netzwerkes;
- Fig. 3: ein schematisches Ablaufdiagramm eines Ausführungsbeispiels des erfindungsgemäßen Verfahrens zum Übertragen von Signalisierungsnachrichten in einem paketvermittelten Netzwerk;
- Fig. 4 und 5: schematische Blockschaltbilder eines paketvermittelten Netzwerkes gemäß der Erfindung; und

- Fig. 6: ein schematisches Blockdiagramm eines 802.11-Headers.

In allen Figuren sind gleiche bzw. funktionsgleiche Mittel und Einrichtungen - sofern nichts anderes angegeben - mit denselben Bezugszeichen versehen.

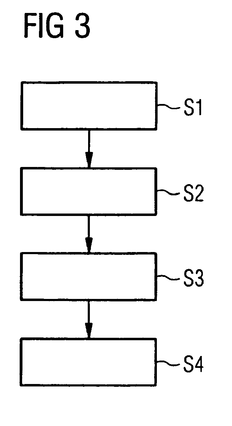

In Fig. 3 ist ein schematisches Ablaufdiagramm eines Ausführungsbeispiels des erfindungsgemäßen Verfahrens zum Übertragen von Signalisierungsnachrichten in einem paketvermittelten Netzwerk 1 dargestellt.

Nachfolgend wird das erfindungsgemäße Verfahren anhand des Blockschaltbildes in Fig. 3 mit Bezug auf die Blockschaltbilder der Fig. 4 und 5 erläutert. Die Fig. 4 und 5 zeigen schematische Blockschaltbilder eines paketvermittelten Netzwerkes 1 gemäß der Erfindung.

Das paketvermittelte Netzwerk 1 hat zumindest drei Knoten 10-30. Zumindest zwei der zumindest drei Knoten 10-30 sind als Sende-/Empfangsknoten 10, 20 ausgebildet. Die Sende-/Empfangsknoten 10, 20 sind Quelle und/oder Senke der über das paketvermittelte Netzwerk 1 übertragenen Pakete.

Das paketvermittelte Netzwerk 1 ist beispielsweise als ein WLAN-Netz ausgebildet. Ferner ist ein Weiterleitungsknoten 30 beispielsweise als ein Router oder Routing-Computer ausgebildet. Die Sende-/Empfangsknoten 10, 20 können als Server oder als Teilnehmer-Endgerät ausgestaltet sein.

Ohne Einschränkung der Allgemeinheit hat das paketvermittelte Netzwerk 1 gemäß der Fig. 4 und 5 zwei Sende-/Empfangsknoten 10, 20 und einen Weiterleitungsknoten 30. Selbstverständlich kann das paketvermittelte Netzwerk 1 eine Vielzahl von Sende-/Empfangsknoten und eine Vielzahl von Weiterleitungsknoten haben.

Der Weiterleitungsknoten 30 hat zumindest eine zuverlässige Sicherungsschicht 31 und eine Network-Coding-Schicht 32. Vorzugsweise hat der Weiterleitungsknoten 30 eine Bit-Übertragungsschicht, die zuverlässige Sicherungsschicht 31, die Network-Coding-Schicht 32 und eine IP-Schicht.

Der jeweilige Sende-/Empfangsknoten 10, 20 hat zumindest eine zuverlässige Sicherungsschicht 11, 21, eine Network-Coding-Schicht 12, 22 und eine zuverlässige Transportschicht 13, 33. Vorzugsweise hat der jeweilige Sende-/Empfangsknoten 10, 20 eine Bit-Übertragungsschicht, die zuverlässige Sicherungsschicht 11, 21, die Network-Coding-Schicht 12, 22, eine IP-Schicht, die zuverlässige Transportschicht 13, 33 und eine Anwendungsschicht.

Der jeweilige Sende-/Empfangsknoten 10, 20 ist dazu eingerichtet, zumindest eine Signalisierungsnachricht in ein jeweiliges uncodiertes Transportschicht-Paket G ohne Transportschichtnutzdaten zu verpacken und das jeweilige uncodierte Transportschicht-Paket G, im Weiteren auch GOHAR-Paket G, an einen vorbestimmten Weiterleitungsknoten 30 priorisiert zu senden. Demgegenüber ist der jeweilige vorbestimmte Weiterleitungsknoten 30 dazu eingerichtet, das uncodierte Transportschicht-Paket G priorisiert weiterzuleiten.

Die zwischen den Knoten 10, 20 und 30 übertragenen Pakete sind mit jeweils einem Buchstaben und einer Zahl bezeichnet. Die Zahlen der Pakete indizieren ihre chronologische Abfolge. Hinsichtlich der Buchstaben bezeichnet "D" ein Transportschicht-Datensegment, "M" eine Sicherungsschicht-Bestätigung, "C" eine Network-Coding-Bestätigung, "T" eine Transportschicht-Bestätigung und "G" das erfindungsgemäße GOHAR-Paket.

Das erfindungsgemäße Verfahren nach Figur 1 weist die Verfahrensschritte S1 bis S4 auf:

### Verfahrensschritt S1:

Ein paketvermitteltes Netzwerk 1 mit zumindest drei Knoten 10, 30 wird bereitgestellt, wobei ein jeweiliger Weiterleitungsknoten 30 zumindest eine zuverlässige Sicherungsschicht 31 und eine Network-Coding-Schicht 32 hat und ein jeweiliger Sende-/Empfangsknoten 10, 20 zusätzlich eine zuverlässige Transportschicht 13, 23 hat.

### Verfahrensschritt S2:

Eine jeweilige Signalisierungsnachricht wird in ein jeweiliges uncodiertes Transportschicht-Paket G ohne Transportschicht-Nutzdaten, im Weiteren GOHAR-Paket, durch einen Sende-/Empfangsknoten 10, beispielsweise einen ersten Sende-/Empfangsknoten 10, verpackt.

### Verfahrensschritt S3:

Das jeweilige uncodierte Transportschicht-Paket G wird von dem Sende-/Empfangsknoten 10 an einen vorbestimmten Weiterleitungsknoten 30 priorisiert gesendet.

### Verfahrensschritt S4:

Das jeweilige codierte Transportschicht-Paket G wird durch den vorbestimmten Weiterleitungsknoten 30 priorisiert weitergeleitet, beispielsweise an einen weiteren Weiterleitungsknoten oder an den Ziel-Sende-/Empfangsknoten 20.

Vorzugsweise wird die jeweilige zuverlässige Sicherungsschicht 11, 21, 31 der Knoten 10-31 dazu eingerichtet, eine Sicherungsschicht-Bestätigung M zur Bestätigung eines empfangenen Sicherungsschicht-Paketes an den das Sicherungsschichtpaket sendenden Knoten 10-30 zu übertragen. Weiter kann die jeweilige zuverlässige Transportschicht 13, 23 der Sende-/Empfangsknoten 10, 30 dazu eingerichtet werden, eine Transportschicht-Bestätigung T zur Bestätigung eines empfangenen, mittels Network-Coding codierten Transportschicht-Paketes an den das codierte Transportschicht-Paket sendenden Knoten 10-30 zu übertragen. Dabei wird das jeweilige uncodierte Transportschicht-Paket G priorisiert gegenüber mittels Network-Coding codierten Transportschicht-Paketen gesendet bzw. weitergeleitet.

Bei priorisiertem Senden bzw. Weiterleiten wird die jeweilige zuverlässige Sicherungsschicht 11, 21, 31 der Knoten 10-30 insbesondere dazu eingerichtet, das uncodierte Transportschicht-Paket G zu detektieren und abhängig davon das detektierte, uncodierte Transportschicht-Paket G priorisiert weiterzuleiten. Bei der Detektion auf uncodierte Transportschicht-Pakete G werden die von der jeweiligen zuverlässigen Sicherungsschicht 11, 21, 31 empfangenen Transportschicht-Pakete G auf ein Fehlen von Transportschicht-Nutzdaten untersucht. Fehlen die Transportschicht-Nutzdaten, so interpretiert die zuverlässige Sicherungsschicht 11, 21, 31 das empfangene Transportschicht-Paket als ein erfindungsgemäßes GOHAR-Paket und leitet dieses priorisiert weiter.

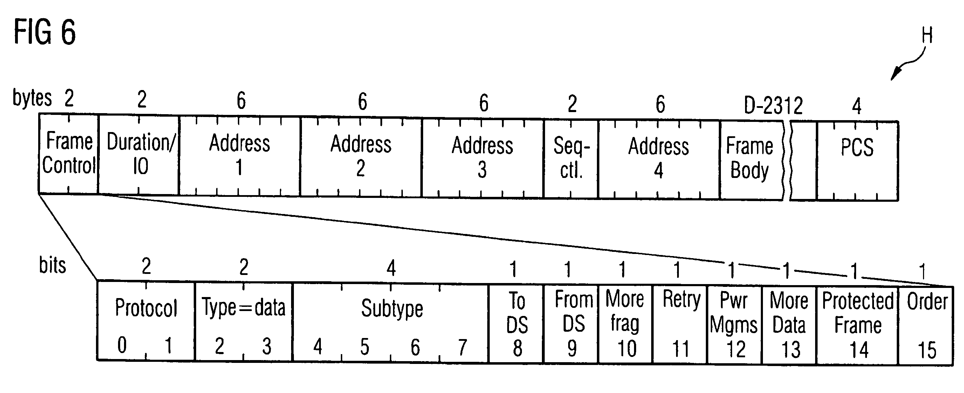

Des Weiteren kann zu der Detektion auf uncodierte Transportschicht-Pakete G ein vorbestimmtes Feld (Type, Sub type) des Headers H des uncodierten Transportschicht-Paketes G verwendet werden. Dazu wird das vorbestimmte Feld Type, Sub type (siehe Fig. 6) mit einer Anzeigeinformation ausgestattet. Die Anzeigeinformation ist vorzugsweise dazu eingerichtet, der jeweiligen zuverlässigen Sicherungsschicht 11, 21, 31 eines das uncodierte Transportschicht-Paket G empfangenden Knotens 10-30 anzuzeigen, dass das empfangene Transportschicht-Paket ein uncodiertes Transportschicht-Paket G ohne Transportschicht-Nutzdaten ist. Dabei kann das vorbestimmte Feld des Headers H des uncodierten Transportschicht-Paketes G von der jeweiligen zuverlässigen Sicherungsschicht 11, 21, 31 der Knoten 10-30 interpretiert werden.

Des Weiteren wird die jeweilige Network-Coding-Schicht 12, 22, 32 der Knoten 10-30 des Netzwerkes 1 vorzugsweise dazu eingerichtet, bei Empfangen eines codierten Transportschicht-Paketes eine Network-Coding-Bestätigung C an den sendenden Knoten 10-30 des codierten Transportschicht-Paketes zu übertragen und bei Empfangen eines uncodierten Transportschicht-Paketes G das uncodierte Transportschicht-Pakete G ohne Übertragung einer Network-Coding-Bestätigung C weiterzuleiten. Somit kann hier eine herkömmliche Network-Coding-Bestätigung C eingespart werden.

Beispielsweise weist die zuverlässige Sicherungsschicht 11, 21, 31 eine MAC-Schicht und eine LLC-Schicht auf. Die zuverlässige Transportschicht 13, 33 kann als eine TCP-Schicht ausgebildet sein. Dabei wird vorzugsweise jedes TCP-ACK, jedes TCP-SYN und jedes TCP-FIN in ein jeweiliges GOHAR-Paket G verpackt.

Das vorbestimmte Feld des Headers H des uncodierten Transportschicht-Pakets G kann als Ethertype-Feld der LLC-Schicht ausgebildet sein. Alternativ kann das vorbestimmte Feld Type, Sub type des Headers H des uncodierten Transportschicht-Paketes G als Type-Feld Type oder als Sub type-Feld Sub type der MAC-Schicht ausgebildet sein.

Dazu zeigt Fig. 6 ein schematisches Blockdiagramm eines 802.11-Headers H.

Bei der Verwendung des Ethertype-Feldes der LLC-Schicht oder des Type-Feldes Type oder des Sub type-Feldes Sub type der MAC-Schicht ist es notwendig, die Semantik dieser Felder entsprechend anzupassen. In untenstehender Tabelle ist die standardmäßige Bedeutung des Sub type-Feldes Sub type in Abhängigkeit des Type-Felds Type angegeben. Da es sich bei einem GOHAR-Paket G aus der Sicht des 802-11-Protokolles um einen 802-11-Datenrahmen handelt, wird vorzugsweise die Kennzeichnung als GOHAR-Paket G über das reservierte Type-Feld Type realisiert.

| Sub type value (Sub type- Wert | Sub type name (Sub type Name) |
|---|---|
| Management frames (type=00) | |
| (Management-Rahmen) (Ty- p=00) | |
| 0000 | Association request (Assoziierungsanfrage) |
| 0001 | Association response (Assoziierungsantwort) |
| 0010 | Reassociation request (Wiederassoziierungs-Anfrage) |
| 0011 | Reassociation response (Wiederassozierungantwort) |
| 0100 | Probe request (Prüfanfrage) |
| 0101 | Probe response (Prüfantwort) |
| 1000 | Beacon (Funkfeuer) |
| 1001 | Announcement traffic indication (ATIM) (Anzeige-Verkehrs-Indikations-Nachricht (AVIN) |
| 1010 | Disassociation (Dissoziation) |
| 1011 | Authentification (Authentifizierung) |
| 1100 | Deauthentification (Deauthentifizierung) |
| 1101 | Action (for spectrum management with 802.11h, auch für QoS) Aktion (zum Spektrum-Management mit 802.11h, auch für QoS) |
| Control frames (type=01) | |
| (Steuer-Rahmen) (Typ=01) | |
| 1000 | Block Acknowledgment Request (Blockbestätigungs-Anfrage) |
| 1001 | Block Acknowledgement (Block-Bestätigung) (QoS) |
| 1010 | Power Save (PS)-Poll (Energiesparen) |
| 1011 | RTS |
| 1100 | CTS |
| 1101 | Acknowledgement |
| | (ACK)(Bestätigung) |
| 1110 | Contention-Free (CF)-End (Wettbewerbsfrei-Ende) |
| 1111 | CF-End+CF-Ack |
| Data frames (type=10) (Datenrahmen (Typ=10)) | |
| 0000 | Data (Daten) |
| 0001 | Data+CF-Ack |
| 0010 | Data+CF-Poll |
| 0011 | Data+CF-Ack+CF-Poll |
| 0100 | Null data (Null-Daten) (no transmission) (keine Datenübertragung) |
| 0101 | CF-Ack (no data transmitted) |
| | (keine Datenübertragung) |
| 0110 | CF-Poll (no data transmitted) (keine Datenübertragung) |
| 0111 | CF-Ack+CF-Poll (no data transmitted) (keine Datenübertragung) |
| 1000 | QoS Datac |
| 1001 | QoS Data + CF-Ackc |
| 1010 | QoS Data + CF-Pollc |
| 1011 | QoS Data + CF-Ack + CF-Pollc |
| 1100 | QoS Null (no data transmitted)(keine Datenübertragung)c |
| 1101 | QoS CF-Ack (no data transmitted) (keine Datenübertragung)c |
| 1110 | QoS CF-Poll (no data transmitted) (keine Datenübertragung)c |
| 1111 | QoS CF-Ack+CF-Poll (no data transmitted) (keine Datenübertragung)c |
| (Frame type 11 ist reserved) (Rahmentyp 11 ist reserviert) | |

Ein 802.11-Rahmen ist also genau dann ein GOHAR-Paket G, wenn das Type-Feld Type den Wert "11" als Anzeigeinformation hat. In diesem Fall entspricht die Semantik des Sub type-Feldes Sub type dem eines Sub types bei einem Wert "10" des Type-Feldes Type.

| Data frames (type=11) including a GOHAR packet (Datenrahmen (Typ=11) aufweisend ein GOHAR-Paket) | |
|---|---|
| 0000 | Data |
| 0001 | Data+CF-Ack |
| 0010 | Data+CF-Poll |
| 0011 | Data+CF-Ack+CF-Poll |
| 0100 | Null data (no data transmitted) (keine Datenübertragung) |
| 0101 | CF-Ack (no data transmitted) (keine Datenübertragung) |
| 0110 | CF-Poll (no data transmitted) (keine Datenübertragung) |
| 0111 | CF-Ack+CF-Poll (no data transmitted) |
| | (keine Datenübertragung) |
| 1000 | QoS Datac |
| 1001 | QoS Data + CF-Ackc |
| 1010 | QoS Data + CF-Pollc |
| 1011 | QoS Data + CF-Ack + CF-Pollc |
| 1100 | QoS Null (no data transmitted) (keine Datenübertragung)c |
| 1101 | QoS CF-Ack (no data transmitted) (keine Datenübertragung)c |
| 1110 | QoS CF-Poll (no data transmitted)(keine Datenübertragung)c |
| 1111 | QoS CF-Ack+CF-Poll (no data transmitted)(keine Datenübertragung) |

Weiter kann eine Sicherungsbestätigung M von der zuverlässigen Sicherungsschicht 11, 21, 31 dann als Antwort auf ein empfangenes Transportschicht-Paket erzeugt werden und an den sendenden Knoten 10, 30 des Transportschicht-Paketes übertragen werden, wenn das vorbestimmte Feld Type, Sub type die Anzeigeinformation, beispielsweise "11", zur Anzeige eines uncodierten Transportschicht-Paketes G nicht aufweist. Ferner wird vorzugsweise keine Sicherungsschicht-Bestätigung M als Antwort auf ein empfangenes Transportschicht-Paket erzeugt und an den sendenden Knoten 10-30 des Transportschicht-Paketes übertragen, wenn das vorbestimmte Feld Type, Sub type ein Network-Coding-Paket in den Nutzdaten des Transportschicht-Paketes indiziert. Weiter wird nur dann eine Network-Coding-Bestätigung C von der Network-Coding-Schicht 12, 22, 32 als Antwort auf ein empfangenes Transportschicht-Paket erzeugt und an den sendenden Knoten 10-30 des Transportschicht-Pakets übertragen, wenn das vorbestimmte Feld Type, Sub type ein Network-Coding-Paket in den Nutzdaten des Transportschicht-Pakets indiziert und wenn das Network-Coding-Paket von der jeweiligen Network-Coding-Schicht 12, 22, 32 decodierbar ist.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

## Patentansprüche

1. Verfahren zum Übertragen von Signalisierungsnachrichten in einem paketvermittelten Netzwerk (1), mit den Schritten:
a) Bereitstellen eines paketvermittelten Netzwerks (1) mit zumindest drei Knoten (10-30), wobei ein jeweiliger Weiterleitungs-Knoten (30) zumindest eine zuverlässige Sicherungsschicht (31) und eine Network-Coding-Schicht (32) und ein jeweiliger Sende-/Empfangs-Knoten (10, 20) zusätzlich eine zuverlässige Transportschicht (13, 23) hat;
b) Verpacken zumindest einer Signalisierungsnachricht in ein jeweiliges uncodiertes Transportschicht-Paket (G) ohne Transportschicht-Nutzdaten in einem Sende-/Empfangs-Knoten (10) ;
c) Priorisiertes Senden des jeweiligen uncodierten Transportschicht-Paketes (G) an einen vorbestimmten Weiterleitungs-Knoten (30) durch den Sende-/Empfangs-Knoten (10); und
d) Priorisiertes Weiterleiten des jeweiligen uncodierten Transportschicht-Paketes (G) durch den Weiterleitungs-Knoten (30).

2. Verfahren nach Anspruch 1,
**dadurch gekennzeichnet,**
**dass** die jeweilige zuverlässige Sicherungsschicht (11, 21, 31) der Knoten (10, 20, 30) dazu eingerichtet wird, eine Sicherungsschicht-Bestätigung (M) zur Bestätigung eines empfangenen Sicherungsschicht-Pakets an den das Sicherungsschicht-Paket sendenden Knoten (10, 20, 30) zu übertragen.

3. Verfahren nach Anspruch 1 oder 2,
**dadurch gekennzeichnet,**
**dass** die jeweilige zuverlässige Transportschicht (13, 23) der Knoten (10, 30) dazu eingerichtet wird, eine Transportschicht-Bestätigung (T) zur Bestätigung eines empfangenen, mittels Network-Coding codierten Transportschicht-Pakets an den das codierte Transportschicht-Paket sendenden Knoten (10, 20) zu übertragen.

4. Verfahren nach Anspruch 1, 2 oder 3,
**dadurch gekennzeichnet,**
**dass** das jeweilige uncodierte Transportschicht-Paket (G) priorisiert gegenüber mittels Network-Coding codierten Transportschicht-Paketen gesendet wird.

5. Verfahren nach Anspruch 1 oder einem der Ansprüche 2-4,
**dadurch gekennzeichnet,**
**dass** die jeweilige zuverlässige Sicherungsschicht (11, 21, 31) der Knoten (10-30) dazu eingerichtet wird, das uncodierte Transportschicht-Paket (G) zu detektieren und abhängig davon das detektierte, uncodierte Transportschicht-Paket (G) priorisiert weiterzuleiten.

6. Verfahren nach Anspruch 5,
**dadurch gekennzeichnet,**
**dass** bei der Detektion auf uncodierte Transportschicht-Pakete (G) die von der jeweiligen zuverlässigen Sicherungsschicht (11, 21, 31) empfangenen Transportschicht-Pakete (G) auf ein Fehlen von Transportschicht-Nutzdaten untersucht werden.

7. Verfahren nach Anspruch 6,
**dadurch gekennzeichnet,**
**dass** das jeweilige von der zuverlässigen Sicherungsschicht (11, 21, 31) empfangene Transportschicht-Paket bei Fehlen der Transportschicht- Nutzdaten von der zuverlässigen Sicherungsschicht (11, 21, 31) priorisiert weitergeleitet wird.

8. Verfahren nach Anspruch 5,
**dadurch gekennzeichnet,**
**dass** ein vorbestimmtes Feld (Type, Sub type) des Headers (H) des uncodierten Transportschicht-Pakets (G) mit einer Anzeigeinformation ausgestattet wird, welche dazu eingerichtet wird, der jeweiligen zuverlässigen Sicherungsschicht (11, 21, 31) eines das uncodierte Transportschicht-Paket (G) empfangenden Knotens (10-30) anzuzeigen, dass das empfangene Transportschicht-Paket (G) ein uncodiertes Transportschicht-Paket (G) ohne Transportschicht-Nutzdaten ist.

9. Verfahren nach Anspruch 8,
**dadurch gekennzeichnet,**
**dass** die jeweilige zuverlässige Sicherungsschicht (11, 21, 31) der Knoten (10-30) dazu eingerichtet wird, das vorbestimmte Feld (Type, Sub type) des Headers (H) des uncodierten Transportschicht-Pakets (G) zu interpretieren.

10. Verfahren nach Anspruch 1 oder einem der Ansprüche 2-9,
**dadurch gekennzeichnet,**
**dass** die jeweilige Network-Coding-Schicht (12, 22, 32) der Knoten (10-30) des Netzwerkes (1) dazu eingerichtet wird, bei Empfangen eines codierten Transportschicht-Pakets eine Network-Coding-Bestätigung (C) an den sendenden Knoten (10-30) des codierten Transportschicht-Pakets zu übertragen und bei Empfangen eines uncodierten Transportschicht-Pakets (G) das empfangene uncodierte Transportschicht-Paket (G) ohne Übertragung einer Network-Coding-Bestätigung (C) weiterzuleiten.

11. Verfahren nach Anspruch 1 oder einem der Ansprüche 2-10,
**dadurch gekennzeichnet,**
**dass** jede Signalisierungsnachricht in ein jeweiliges uncodiertes Transportschicht-Paket (G) ohne Transportschicht-Nutzdaten verpackt wird.

12. Verfahren nach Anspruch 1 oder einem der Ansprüche 2-11,
**dadurch gekennzeichnet,**
**dass** die zuverlässige Sicherungsschicht (11, 21, 31) eine MAC-Schicht und eine LLC-Schicht aufweist und/oder die zuverlässige Transportschicht (13, 33) als eine TCP-Schicht ausgebildet wird.

13. Verfahren nach Anspruch 12,
**dadurch gekennzeichnet,**
**dass** ein TCP-ACK, ein TCP-SYN und ein TCP-FIN in ein jeweiliges uncodiertes Transportschicht-Paket (G) ohne Transportschicht-Nutzdaten verpackt werden.

14. Verfahren nach Anspruch 12,
**dadurch gekennzeichnet,**
**dass** das vorbestimmte Feld des Headers des uncodierten Transportschicht-Pakets (G) als Ethertype-Feld ausgebildet wird.

15. Verfahren nach Anspruch 12,
**dadurch gekennzeichnet,**
**dass** das vorbestimmte Feld (Type, Sub type) des Headers (H) des uncodierten Transportschicht-Pakets (G) als Type-Feld (Type) oder als Sub-type-Feld (Sub-type) der MAC-Schicht ausgebildet wird.

16. Verfahren nach Anspruch 8 oder einem der Ansprüche 9-15,
**dadurch gekennzeichnet,**
**dass** eine Sicherungsschicht-Bestätigung (M) von der zuverlässigen Sicherungsschicht (11, 21, 31) dann als Antwort auf ein empfangenes Transportschicht-Paket erzeugt wird und an den sendenden Knoten (10-30) des Transportschicht-Pakets übertragen wird, wenn das vorbestimmte Feld (Type, Sub type)die Anzeigeinformation zur Anzeige eines uncodierten Transportschicht-Pakets (G) nicht aufweist.

17. Verfahren nach Anspruch 9 oder einem der Ansprüche 9-15,
**dadurch gekennzeichnet,**
**dass** keine Sicherungsschicht-Bestätigung (M) als Antwort auf ein empfangenes Transportschicht-Paket erzeugt und an den sendenden Knoten (10-30) des Transportschicht-Pakets übertragen wird, wenn das vorbestimmte Feld (Type, Sub type) ein Network-Coding-Paket in den Nutzdaten des Transportschicht-Pakets indiziert.

18. Verfahren nach Anspruch 9 oder einem der Ansprüche 9-17,
**dadurch gekennzeichnet,**
**dass** nur eine Network-Coding-Bestätigung (C) von der Network-Coding-Schicht (12, 22, 32) als Antwort auf ein empfangenes Transportschicht-Paket erzeugt wird und an den sendenden Knoten (10-30) des Transportschicht-Pakets übertragen wird, wenn das vorbestimmte Feld (Type, Sub type) ein Network-Coding-Paket in den Nutzdaten des Transportschicht-Pakets indiziert und wenn das Network-Coding-Paket von der jeweiligen Network-Coding-Schicht (12, 22, 32) decodierbar ist.

19. Verfahren nach Anspruch 1 oder einem der Ansprüche 2-18,
**dadurch gekennzeichnet,**
**dass** Schritt d) ausgebildet wird durch:
- Priorisiertes Weiterleiten des jeweiligen uncodierten Transportschicht-Pakets (G) durch den Weiterleitungs-Knoten (30) an einen weiteren vorbestimmten Weiterleitungs-Knoten oder an einen weiteren Sende-/Empfangs-Knoten.

20. Computerprogramm-Produkt, welches auf einer Programmgesteuerten Einrichtung die Durchführung eines Verfahrens nach einem der Ansprüche 1 bis 19 veranlasst.

21. Paketvermitteltes Netzwerk (1) zum Übertragen von Signalisierungsnachrichten, mit:
- zumindest drei Knoten (10-30), wobei ein jeweiliger Weiterleitungs-Knoten (30) zumindest eine zuverlässige Sicherungsschicht (31) und eine Network-Coding-Schicht (32) und ein jeweiliger Sende-/Empfangs-Knoten (10, 20) zusätzlich eine zuverlässige Transportschicht (13, 33) hat;
- wobei der jeweilige Sende-/Empfangs-Knoten (10, 20) dazu eingerichtet ist, zumindest eine Signalisierungsnachricht in ein jeweiliges uncodiertes Transportschicht-Paket (G) ohne Transportschicht-Nutzdaten zu verpacken und das jeweilige uncodierte Transportschicht-Paket (G) an einen vorbestimmten Weiterleitungs-Knoten (30) priorisiert zu senden; und
- wobei der vorbestimmte Weiterleitungs-Knoten (30) das uncodierte Transportschicht-Paket (G) priorisiert weiterleitet.

22. Paketvermitteltes Netzwerk nach Anspruch 21,
**dadurch gekennzeichnet,**
**dass** der jeweilige Weiterleitungs-Knoten (30) eine Bitübertragungsschicht, die zuverlässige Sicherungsschicht (31), die Network-Coding-Schicht (32) und eine IP-Schicht hat und/oder
der jeweilige Sende-/Empfangs-Knoten (10, 20) eine Bitübertragungsschicht, die zuverlässige Sicherungsschicht (11, 21), die Network-Coding-Schicht (12, 22), eine IP-Schicht, die zuverlässige Transportschicht (13, 33) und eine Anwendungsschicht hat.

## Claims

1. Method for transmitting signalling messages in a packet-switched network (1), with the steps:
a) provision of a packet-switched network (1) with at least three nodes (10-30), a respective forwarding node (30) having at least one reliable link layer (31) and one network coding layer (32) and one respective send/receive node (10, 20) plus a reliable transport layer (13, 23);
b) packing of at least one signalling message into a respective uncoded transport layer packet (G) without transport layer user data in a send/receive node (10);
c) prioritised transmission of the respective uncoded transport layer packet (G) to a predetermined forwarding node (30) by the send/receive node (10); and
d) prioritised forwarding of the respective uncoded transport layer packet (G) by the forwarding node (30).

2. Method according to claim 1,
**characterised in that**
the respective reliable link layer (11, 21, 31) of the nodes (10, 20, 30) is set up to transmit a signalling layer acknowledgement (M) to acknowledge receipt of a link layer packet to the node (10, 20, 30) sending the link layer packet.

3. Method according to claim 1 or 2,
**characterised in that**
the respective reliable transport layer (13, 23) of the nodes (10, 30) is set up to transmit a transport layer acknowledgement (T) to acknowledge receipt of a transport layer packet coded using network coding to the node (10, 20) sending the coded transport layer packet.

4. Method according to claim 1, 2 or 3,
**characterised in that**
the respective uncoded transport layer packet (G) is transmitted in a prioritised manner compared to transport layer packets coded using network coding.

5. Method according to claim 1 or one of claims 2-4,
**characterised in that**
the respective reliable link layer (11, 21, 31) of the nodes (10-30) is set up to detect the uncoded transport layer packet (G) and depending thereon to forward the detected, uncoded transport layer packet (G) in a prioritised manner.

6. Method according to claim 5,
**characterised in that**
when uncoded transport layer packets (G) are detected the transport layer packets (G) received by the respective reliable transport layer (11, 21, 31) are examined for an absence of transport layer user data.

7. Method according to claim 6,
**characterised in that**
the respective transport layer packet received by the reliable link layer (11, 21, 31) is forwarded by the reliable link layer (11, 21, 31) in a prioritised manner in the absence of the transport layer user data.

8. Method according to claim 5,
**characterised in that**
a predetermined field (type, subtype) of the header (H) of the uncoded transport layer packet (G) is provided with indicator information which is set up to indicate to the respective reliable link layer (11, 21, 31) of a node (10-30) receiving the uncoded transport packet (G) that the received transport layer packet (G) is an uncoded transport layer packet (G) without transport layer user data.

9. Method according to claim 8,
**characterised in that**
the respective reliable link layer (11, 21, 31) of the nodes (10-30) is set up to interpret the predetermined field (type, subtype) of the header (H) of the uncoded transport layer packet (G).

10. Method according to claim 1 or one of claims 2-9,
**characterised in that**
the respective network coding layer (12, 22, 32) of the nodes (10-30) of the network (1) is set up, on receipt of a coded transport layer packet, to transmit a network coding acknowledgement (C) to the node (10-30) sending the coded transport layer packet and on receipt of an uncoded transport layer packet (G) to forward the received uncoded transport layer packet (G) without transmitting a network coding acknowledgement (C).

11. Method according to claim 1 or one of claims 2-10,
**characterised in that**
each signalling message is packed into a respective uncoded transport layer packet (G) without transport layer user data.

12. Method according to claim 1 or one of claims 2-11,
**characterised in that**
the reliable link layer (11, 21, 31) has an MAC layer and an LLC layer and/or the reliable transport layer (13, 33) is embodied as a TCP layer.

13. Method according to claim 12,
**characterised in that**
a TCP-ACK, a TCP-SYN and a TCP-FIN are packed into a respective uncoded transport layer packet (G) without transport layer user data.

14. Method according to claim 12,
**characterised in that**
the predetermined field of the header of the uncoded transport layer packet (G) is embodied as an Ethertype field.

15. Method according to claim 12,
**characterised in that**
the predetermined field (type, subtype) of the header (H) of the uncoded transport layer packet (G) is embodied as a type field (type) or as a subtype field (subtype) of the MAC layer.

16. Method according to claim 8 or one of claims 9-15,
**characterised in that**
a link layer acknowledgement (M) is then generated by the reliable link layer (11, 21, 31) as a response to a received transport layer packet and is transmitted to the node (10-30) sending the transport layer packet if the predetermined field (type, subtype) does not have the indicator information to indicate an uncoded transport layer packet (G).

17. Method according to claim 9 or one of claims 9-15,
**characterised in that**
no link layer acknowledgement (M) is generated as a response to a received transport layer packet or sent to the node (10-30) sending the transport layer packet if the predetermined field (type, subtype) indicates a network coding packet in the user data of the transport layer packet.

18. Method according to claim 9 or one of claims 9-17,
**characterised in that**
only one network coding acknowledgement (C) is generated by the network coding layer (12, 22, 32) as a response to a received transport layer packet and is transmitted to the node (10-30) sending the transport layer packet if the predetermined field (type, subtype) indicates a network coding packet in the user data of the transport layer packet and if the network coding packet can be decoded by the respective network coding layer (12, 22, 32).

19. Method according to claim 1 or one of claims 2-18,
**characterised in that**
step d) is formed by:
- prioritised forwarding of the respective uncoded transport layer packet (G) by the forwarding node (30) to a further predetermined forwarding node or to a further send/receive node.

20. Computer program product which on a program-controlled facility initiates the performance of a method according to one of claims 1 to 19.

21. Packet-switched network (1) for transmitting signalling messages, with:
- at least three nodes (10-30), a respective forwarding node (30) having at least one reliable link layer (31) and one network coding layer (32) and one respective send/receive node (10, 20) plus a reliable transport layer (13, 33);
- the respective send/receive node (10, 20) being set up to pack at least one signalling message into a respective uncoded transport layer packet (G) without transport layer user data and to send the respective uncoded transport layer packet (G) to a predetermined forwarding node (10) in a prioritised manner; and
- the predetermined forwarding node (30) forwarding the uncoded transport layer packet (G) in a prioritised manner.

22. Packet-switched network according to claim 21,
**characterised in that**
the respective forwarding node (30) has a bit transmission layer, the reliable link layer (31), the network coding layer (32) and an IP layer and/or the respective send/receive node (10, 20) has a bit transmission layer, the reliable link layer (11, 21), the network coding layer (12, 22), an IP layer, the reliable transport layer (13, 33) and an application layer.

## Revendications

1. Procédé de transmission de messages de signalisation dans un réseau (1) à commutation de paquets, comportant les étapes suivantes :
a) mise à disposition d'un réseau (1) à commutation de paquets avec au moins trois noeuds (10-30), un noeud de retransmission respectif (30) ayant au moins une couche de sécurité fiable (31) et une couche de codage de réseau (32), et un noeud émetteur-récepteur respectif (10, 20) ayant additionnellement une couche de transport fiable (13, 23) ;
b) encapsulation d'au moins un message de signalisation en un paquet respectif non codé (G) de la couche de transport sans données utiles de la couche de transport dans un noeud émetteur-récepteur (10) ;
c) envoi priorisé du paquet respectif non codé (G) de la couche de transport à un noeud de retransmission prédéterminé (30) par le noeud émetteur-récepteur (10) ; et
d) retransmission priorisée du paquet respectif non codé (G) de la couche de transport par le noeud de retransmission (30).

2. Procédé selon la revendication 1, **caractérisé en ce que** la couche de sécurité fiable respective (11, 21, 31) des noeuds (10, 20, 30) est configurée pour transmettre au noeud (10, 20, 30) qui émet le paquet de la couche de sécurité une confirmation (M) de la couche de sécurité pour confirmer un paquet de la couche de sécurité reçu.

3. Procédé selon la revendication 1 ou 2, **caractérisé en ce que** la couche de transport fiable respective (13, 23) des noeuds (10, 30) est configurée pour transmettre au noeud (10, 20) qui émet le paquet codé de la couche de transport une confirmation (T) de la couche de transport pour confirmer un paquet de la couche de transport reçu et codé au moyen d'un codage de réseau.

4. Procédé selon la revendication 1, 2 ou 3, **caractérisé en ce que** le paquet respectif non codé (G) de la couche de transport est envoyé de manière priorisée par rapport à des paquets de la couche de transport codés au moyen d'un codage de réseau.

5. Procédé selon la revendication 1 ou selon l'une des revendications 2 à 4, **caractérisé en ce que** la couche de sécurité fiable respective (11, 21, 31) des noeud (10-30) est configurée pour détecter le paquet non codé (G) de la couche de transport et, en fonction de cela, retransmettre de manière priorisée le paquet non codé détecté (G) de la couche de transport.

6. Procédé selon la revendication 5, **caractérisé en ce que**, en cas de recherche visant à détecter des paquets non codés (G) de la couche de transport, les paquets (G) de la couche de transport reçus par la couche de sécurité fiable respective (11, 21, 31) sont examinés pour y constater l'absence de données utiles de la couche de transport.

7. Procédé selon la revendication 6, **caractérisé en ce que** le paquet respectif de la couche de transport reçu par la couche de sécurité fiable (11, 21, 31) est retransmis de manière priorisée par la couche de sécurité fiable (11, 21, 31) en l'absence des données utiles de la couche de transport.

8. Procédé selon la revendication 5, **caractérisé en ce qu'**un champ prédéterminé (Type, Sub-Type) de l'en-tête (H) du paquet non codé (G) de la couche de transport est pourvu d'une information d'affichage qui est configurée de manière à afficher à la couche de sécurité fiable respective (11, 21, 31) d'un noeud (10-30) qui reçoit le paquet non codé (G) de la couche de transport que le paquet reçu (G) de la couche de transport est un paquet non codé (G) de la couche de transport sans données utiles de la couche de transport.

9. Procédé selon la revendication 8, **caractérisé en ce que** la couche de sécurité fiable respective (11, 21, 31) des noeuds (10-30) est configurée de manière à interpréter le champ prédéterminé (Type, Sub-Type) de l'en-tête (H) du paquet non codé (G) de la couche de transport.

10. Procédé selon la revendication 1 ou selon l'une des revendications 2 à 9, **caractérisé en ce que** la couche de codage de réseau respective (12, 22, 32) des noeuds (10-30) du réseau (1) est configurée de manière à transmettre une confirmation de codage de réseau (C) au noeud émetteur (10-30) du paquet codé de la couche de transport à la réception d'un paquet codé de la couche de transport et à retransmettre le paquet non codé reçu (G) de la couche de transport sans transmission d'une confirmation de codage de réseau (C) à la réception d'un paquet non codé (G) de la couche de transport.

11. Procédé selon la revendication 1 ou selon l'une des revendications 2 à 10, **caractérisé en ce que** chaque message de signalisation est encapsulé en un paquet respectif non codé (G) de la couche de transport sans données utiles de la couche de transport.

12. Procédé selon la revendication 1 ou selon l'une des revendications 2 à 11, **caractérisé en ce que** la couche de sécurité fiable (11, 21, 31) comporte une couche MAC et une couche LLC et/ou la couche de transport fiable (13, 33) se présente sous la forme d'une couche TCP.

13. Procédé selon la revendication 12, **caractérisé en ce qu'**un TCP-ACK, un TCP-SYN et un TCP-FIN sont encapsulés en un paquet respectif non codé (G) de la couche de transport sans données utiles de la couche de transport.

14. Procédé selon la revendication 12, **caractérisé en ce que** le champ prédéterminé de l'en-tête du paquet non codé (G) de la couche de transport se présente sous la forme d'un champ Ethertype.

15. Procédé selon la revendication 12, **caractérisé en ce que** le champ prédéterminé (Type, Sub-Type) de l'en-tête (H) du paquet non codé (G) de la couche de transport se présente sous la forme d'un champ Type (Type) ou d'un champ Sub-Type (Sub-Type) de la couche MAC.

16. Procédé selon la revendication 8 ou selon l'une des revendications 9 à 15, **caractérisé en ce que** la couche de sécurité fiable (11, 21, 31) génère une confirmation (M) de la couche de sécurité en réponse à un paquet de la couche de transport reçu et la transmet au noeud (10-30) qui émet le paquet de la couche de transport lorsque le champ prédéterminé (Type, Sub-Type) ne comporte pas l'information d'affichage pour afficher un paquet non codé (G) de la couche de transport.

17. Procédé selon la revendication 9 ou selon l'une des revendications 9 à 15, **caractérisé en ce qu'**aucune confirmation (M) de la couche de sécurité n'est générée en réponse à un paquet de la couche de transport reçu et n'est transmise au noeud (10-30) qui émet le paquet de la couche de transport lorsque le champ prédéterminé (Type, Sub-Type) indique un paquet de codage de réseau dans les données utiles du paquet de la couche de transport.

18. Procédé selon la revendication 9 ou selon l'une des revendications 9 à 17, **caractérisé en ce que** la couche de codage de réseau (12, 22, 32) génère seulement une confirmation (C) de codage de réseau en réponse à un paquet de la couche de transport reçu et la transmet au noeud (10-30) qui émet le paquet de la couche de transport lorsque le champ prédéterminé (Type, Sub-Type) indique un paquet de codage de réseau dans les données utiles du paquet de la couche de transport et lorsque le paquet de codage de réseau peut être décodé par la couche de codage de réseau respective (12, 22, 32).

19. Procédé selon la revendication 1 ou selon l'une des revendications 2 à 18, **caractérisé en ce que** l'étape d) consiste à retransmettre de manière priorisée le paquet respectif non codé (G) de la couche de transport par le noeud de retransmission (30) vers un autre noeud de retransmission prédéterminé ou vers un autre noeud émetteur-récepteur.

20. Produit de programme informatique qui fait exécuter un procédé selon l'une des revendications 1 à 19 sur un dispositif commandé par un programme.

21. Réseau à commutation de paquets (1) pour transmettre des messages de signalisation, avec :
- au moins trois noeuds (10-30), un noeud de retransmission respectif (30) ayant au moins une couche de sécurité fiable (31) et une couche de codage de réseau (32), et un noeud émetteur-récepteur respectif (10, 20) ayant additionnellement une couche de transport fiable (13, 33) ;
- le noeud émetteur-récepteur respectif (10, 20) étant configuré pour encapsuler au moins un message de signalisation en un paquet respectif non codé (G) de la couche de transport sans données utiles de la couche de transport et envoyer le paquet respectif non codé (G) de la couche de transport de manière priorisée à un noeud de retransmission prédéterminé (30) ; et
- le noeud de retransmission prédéterminé (30) retransmettant le paquet non codé (G) de la couche de transport de manière priorisée.

22. Réseau à commutation de paquets selon la revendication 21, **caractérisé en ce que** le noeud de retransmission respectif (30) a une couche de transmission binaire, la couche de sécurité fiable (31), la couche de codage de réseau (32) et une couche IP et/ou le noeud émetteur-récepteur respectif (10, 20) a une couche de transmission binaire, la couche de sécurité fiable (11, 21), la couche codage de réseau (12, 22), une couche IP, la couche de transport fiable (13, 33) et une couche d'application.
